Europäisches Patentamt

European Patent Office

Office européen des brevets

(11) Veröffentlichungsnummer: **0 301 272**
**A2**

(12) **EUROPÄISCHE PATENTANMELDUNG**

(21) Anmeldenummer: 88110643.9

(22) Anmeldetag: 04.07.88

(51) Int. Cl.4: **B01D 53/34**

(30) Priorität: 29.07.87 AT 1926/87
01.02.88 AT 196/88

(43) Veröffentlichungstag der Anmeldung:
01.02.89 Patentblatt 89/05

(84) Benannte Vertragsstaaten:
**AT BE CH DE ES FR GB GR IT LI LU NL SE**

(71) Anmelder: **WAAGNER-BIRO
AKTIENGESELLSCHAFT**
**Stadlauer-Strasse 54 Postfach 11**
**A-1221 Wien(AT)**

(72) Erfinder: **Mair, Franz, Dipl.-Ing.**
**Gartengasse 21/III**
**A-8010 Graz(AT)**
Erfinder: **Lindbauer, Ralf, Dr.**
**Statteggerstrasse 81e**
**A-8045 Graz(AT)**

(74) Vertreter: **Wallner, Gerhard, Dipl.-Ing.**
**c/o Waagner-Biro Aktiengesellschaft**
**Patentabteilung Stadlauer-Strasse 54**
**Postfach 11**
**A-1221 Wien(AT)**

(54) **Verfahren und Vorrichtung zur Abgas- oder Abluftreinigung.**

(57) In einem Sorptionsbett, welches als Fließbettreaktor eventuell mit zirkulierender Wirbelschichte oder Festbettreaktor ausgebildet ist, zur trockenen Abgas- oder Abluftreinigung werden trocken eingebrachte Sorbentien im Temperaturbereich zwischen 30 und 130° C von sauren und/oder oxidierbaren Schadgasen durchströmt, die in einem Abgas mit mindestens 2 % Sauerstoffgehalt eingebunden sind. Als Schadgase kommen $SO_x$, HCl, HF, $NO_x$, CO und auch Kohlenwasserstoff in Frage. Die mittlere Verweilzeit der Sorbentien beträgt mindestens 20 Minuten, im allgemeinen mehrere Stunden bzw. Tage und die mittlere Korngröße hechstens 125 μm. Das Sorbens wird etwa im stöchiometrischen Verhältnis frisch zugeführt und dem entsprechend auch das verbrauchte abgeführt. Als Sorbens kommt hauptsächlich Speisesoda und $Ca(OH)_2$ bzw. $Mg(OH)_2$ in Frage. Als verbrauchtes Sorbens treten Chloride, Fluoride, Sulfat-Sulfit-Gemische und Nitrat-Nitrit-Gemische bzw. Gemische aus allen genannten Verbindungen auf. Insbesondere wird das in Niedertemperaturstufe karbonisierte Reaktionsprodukt durch Rückführung in die Brennkammer des Verbrennungsprozesses durch Entkarbonisation reaktiviert, so daß es in einer Vorstufe hauptsächlich zum Entschwefeln, Entchloren bzw. Entfluoren verwendet werden kann. Durch seine Niedertemperaturcharakteristik läßt sich das Verfahren aber auch zur Abluftreinigung, insbesondere von Tunnelabluft, verwenden, wobei Kohlenmonoxid und Kohlenwasserstoff oxidiert werden. Das verbrauchte Sorbens wird dabei karbonisiert, so daß es in diesem Fall 100%-ig noch für die Hochtemperaturreinigung von Brennkammergasen in einer Brennkammer verwendet werden kann.

Fig.1

## Verfahren und Vorrichtung zur Abgas- oder Abluftreinigung

b) Anwendungsgebiet der Erfindung

Die Erfindung betrifft ein Verfahren zur Abgas- oder Abluftreinigung mittels trocken eingebrachter pulvriger oder körniger Sorbentien bei weniger als 500° C in einer Niedertemperaturstufe, in der saure und/oder oxidierbare Schadgase, wie z.B. $SO_x$, HCl, HF, $NO_x$, CO, $C_nH_m$ unter Abgabe von oxidierenden Radikalen, insbesondere OH⁺, vom Sorbens abgebunden werden, wobei das Abgas zumindest teilweise vor dem Eintritt in die Niedertemperaturstufe vom Flugstaub befreit wurde und mindestens 2 Vol.% Sauerstoff enthält, und eine Vorrichtung zur Durchführung des Verfahrens.

c) Charakteristik der bekannten Lösungen

Es ist bekannt, Schadgase aus Abgasen mittels Sorbentien zu entfernen, wobei es im wesentlichen notwendig ist, die Sorbentien im überstöchiometrischen Verhältnis einzublasen und das gebrauchte, relativ unbeladene, aber doch unbrauchbare Sorbens zu deponieren. Die Folge sind relativ große Deponien, die ein gewisses Unbehagen mit sich bringen.

d) Ziel der Erfindung

Die Erfindung hat es sich zur Aufgabe gestellt, die Sorbentien besser auszunützen und so den benötigten Deponieraum zu reduzieren. Bei diesen Forschungen hat es sich herausgestellt, daß bisher immer die Kurzzeitwirkung der Sorbentien in Betracht gezogen wurde, während langfristig das Sorbens im Abgasstrom ein ganz anderes chemisches Verhalten durch Aktivierung und Abgabe von Radikalen aufweist, so daß es auch im Niedertemperaturbereich bei Vorhandensein von geringen Mengen Sauerstoff im Abgas und bei Vorhandensein mehrerer unterschiedlicher Schadgase im Abgas zu einer Oxidation der Schadgase, also zu einer Sulfat- bzw. Nitratbildung, ja sogar einer Umwandlung von CO in $CO_2$ bzw. Abbau von Kohlenwasserstoffen kommt, wobei das Sorptionsmittel schon in einer Stufe in hohem Maße ausgenützt wird. Ein gewisser begrenzender Effekt ist durch die Karbonatisierung des Sorptionsmittels gegeben, da auch $CO_2$ gebunden wird, welches an und für sich nicht als Schadgas bezeichnet wird. Um aber der erstgenannten Aufgabe nachzukommen, beschäftigt sich die Erfindung auch mit einer Entkarbonatisierung der Sorbentien, die letzten Endes zu einer Vorabscheidung von sauren Schadgasbestandteilen, also $SO_x$, HCl und HF, in der Brennkammer führt, so daß die Endstufe entlastet bzw. der Gesamtabscheidegrad entsprechend erhöht werden kann. Das erfindungsgemäße Verfahren ermöglicht somit die trockene Sorption der genannten Schadgase, insbesondere des am schwierigsten abzuscheidenden $NO_x$, bis auf relativ geringe $NO_x$-Werte, wie sie beispielsweise in der in der Beschreibung angeführten Tabelle angegeben sind, die weit unter den derzeit geltenden gesetzlichen Bestimmungen liegen.

e) Darlegung der Erfindung

Das vorliegende erfindungsgemäße Verfahren ist dadurch gekennzeichnet, daß dem im Abgasstrom ausgebreiteten Sorptionsbett, insbesondere Flächenfilter, bei 30 bis 400° C, vorzugsweise 85 bis 115° C, im nahstöchiometrischen Verhältnis zu den Schadgasen frisches und/oder rezirkuliertes Sorbens zugeführt, dem Abgasstrom somit Sorbens in einem mehrfach überstöchiometrischen Verhältnis über eine lange mittlere Verweilzeit dargeboten und verbrauchtes Sorbens zumindest diskontinuierlich abgeführt wird, wobei das Sorptionsbett eine Mindestschichtstärke von 0,5 mm, insbesondere mittlere Schichtstärke von 2 bis 20 mm, bei einer mittleren Korngröße des verwendeten Sorbens von höchstens 125 μm aufweist. Die erfindungsgemäße Vorrichtung zur Durchführung des Verfahrens, insbesondere zur Erreichung der erweiterten Aufgabenstellung, ist dadurch gekennzeichnet, daß zwischen einer Brennkammer und dem Kamin einer Abgasleitung, insbesondere vor einem Saugzuggebläse, im Temperaturbereich zwischen 30 und 130° C ein Sorbens enthaltender Reaktor, insbesondere Sorptionsbett, mit einer mittleren Schichtdicke des Sorbens von 2 bis 20 mm, dem frisches Sorbens zugeführt wird, vorzugsweise mit angeschlossenem Filter, dem teilweise verbrauchtes Sorbens entnommen wird, angeordnet ist, daß für das teilweise verbrauchte Sorbens eine Rückführungsleitung in die Brennkammer vorgesehen ist, in welcher das Sorbens teilweise reaktiviert und weiter mit Schadgasen beladen wird und daß nach Durchlaufen eines Reaktionsweges in der Abgasleitung ein Abscheider, insbesondere vor Erreichen des Reaktors, für das zumindest teilweise mit Schadgasen beladene Sorbens angeordnet ist.

## f) Ausführungsbeispiel

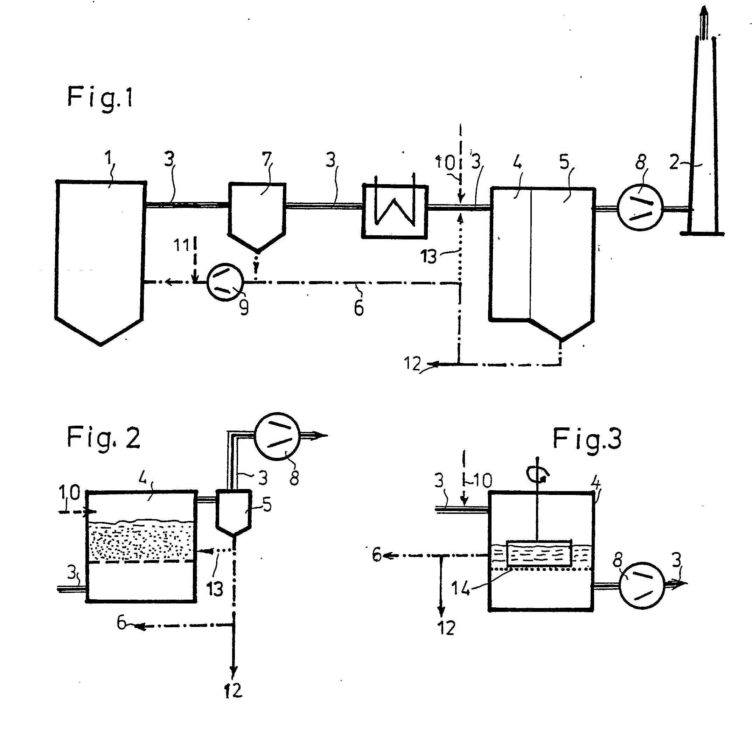

Die Erfindung ist in den angeschlossenen Fig. 1 bis 3 beispielsweise und schematisch dargestellt und durch eine Tabelle, die auf Langzeitversuchen beruht, in mehreren Beispielen praxisnahe illustriert.

In Fig. 1 ist ein Schaltbild der erfindungsgemäßen Anlage dargestellt, wobei in einer Brennkammer 1, welche beispielsweise als Dampfkessel einer Müllverbrennungsanlage ausgebildet ist, ein schadgashältiges Abgas erzeugt wird, welches u.a. $SO_x$, HCl, HF, $NO_x$, unverbrannte Kohlenwasserstoffe und/oder Kohlenmonoxid enthalten kann. Dieses Abgas wird durch eine Abgasleitung 3 nach seiner Abkühlung über ein Saugzuggebläse 8 einem Kamin 2 zugeführt. Im Temperaturbereich des Abgases zwischen 30 und 130 ° C ist ein Sorbens enthaltender Reaktor 4 vorgesehen, dem direkt oder über das zu reinigende Abgas über die Leitung 10 frisches Sorbens in einem nahstöchiometrischen Verhältnis zur erzielten Abscheideleistung zugeführt wird. Der Reaktor 4 kann, wie in Fig. 2 dargestellt, als Fließbettreaktor mit zirkulierender Wirbelschicht ausgebildet sein, wobei in einem Abscheider 5 die Trennung des teilweise beladenen Sorbens vom Abgasstrom vor dem Eintritt in das Saugzugebläse durchgeführt wird. Bei einem Fließbettreaktor mit zirkulierender Wirbelschicht wird ein Teil des abgeschiedenen Sorbens über die Leitung 13 wieder dem Fließbett zugeführt, während bei einer stationären Wirbelschicht das ausgetragene Material als verbraucht anzusehen ist und über die Leitung 12 abgeführt bzw. einer Deponie zugeführt wird. Da aber das Sorbens im Abgasstrom auch teilweise karbonatisiert, kann das verbrauchte Sorbens über die Leitung 6 und ein Rezirkulationsgebläse 9 wieder zurück in die Brennkammer geführt werden, wo das karbonatisierte Sorbens dekarbonatisiert und aufnahmefähig für Chloride, Fluoride und Sulfite gemacht wird. Dieses nachbeladene Sorbens wird nun in einem zweiten Abscheider 7, insbesondere vor dem Reaktor 4, aus dem Abgasstrom zusammen mit dem Flugstaub entfernt. In Fig. 3 ist ein weiterer Reaktortyp schematisch dargestellt, der als Festbettreaktor bezeichnet werden kann. Bei diesem Reaktortyp ruht das Sorbens auf einer Tragschicht 14 und wird vom Abgasstrom an diese Tragschicht angepaßt. Zur Vermeidung von unerwünschten Gassenbildungen wird das Sorbens zumindest diskontinuierlich gerührt bzw. rezirkuliert oder durch Druckluftstöße aufgelockert. Kennzeichen für den Reaktortyp ist der relative große Sorbensinhalt des Reaktors, der beispielsweise den Stunden- oder Tagesbedarf an Sorptionsmittel enthält, wobei das jeweils verbrauchte Sorbens in einem nahstechiometrischen Verhältnis zu- bzw. abgeführt wird. Es ergibt sich dabei eine relativ lange Aufenthaltszeit des Sorbens im Reaktor, so daß die Schadgasteile in das Innere des Kornes diffundieren können, wobei durch die Wasserabgabe des Sorbens infolge der Umwandlung eine gewisse innere Reaktion ermöglicht wird, die als oxidierende Radikale in Erscheinung treten, und die Bildung von chemisch bestandigen Salzen wie Sulfate und Nitrate begünstigt. Als Sorbens können Hydrogenkarbonate wie z.B. $KHCO_3$, $NH_4HCO_3$, $NaHCO_3$ und/oder $Mg(HCO_3)_2$ allein oder als Gemisch mit Aluminiumoxiden, wie z.B. $Al_2O_3$, AlOOH, oder Ersatzstoffen wie Bauxit, Silicagel, Borsäure, einfache organische Säuren, wie z.B. Ameisen-, Essigund/oder Weinsäure, und/oder deren thermisch zersetzliche Alkali- und Erdalkalisalze verwendet werden. Das Mischungsverhältnis hangt vom Verhältnis der Schadstoffe im Abgas, insbesondere $SO_2/NO_x$-Verhältnis, ab, wobei bei einem $SO_2/NO_x$-Verhältnis kleiner 1,5 das Verhältnis Bauxit zu Speisesoda größer als 2 und bei $SO_2/NO_x$ größer 3 kleiner gleich 1 gewählt wird. Die Korngrößen der Aluminiumoxide sollen kleiner als 10 $\mu$m sein und deren spezifische Oberfläche nach BET größer als 50, vorzugsweise größer als 100m$^2$ /g vor ihrer Aufgabe in den Rauchgasstrom sein. Die Voraktivierung erfolgt dabei in einem Temperaturbereich von 300 bis 700 ° C, wobei Porengrößen von 800 bis 2000 Angström bei BET 100m$^2$ /g erreicht werden.

Die Reaktionen können etwa so beschrieben werden:

1. $Ca(OH)_2 \longrightarrow Ca . OH + OH^*$

$xNaHCO_3 \longrightarrow NaHCO_3 . Na_2CO_3 + CO_2 + OH^*$

2. bei Anwesenheit von Schadgasen und ausreichender Kontaktmöglichkeit erfolgt jedoch gleichzeitig:

$NO + OH^* \longrightarrow HNO_2$

$NO_2 + OH^* \longrightarrow HNO_3$

$SO_2 + 2OH^* \longrightarrow H_2SO_4$

Aus 1. und 2. erfolgt im weiteren am alkalischen Reststoff die chemische Fixierung ("Chemisorption")

$2HNO_3 + Na_2CO_3 \longrightarrow 2NaNO_3 + H_2O + CO_2$

bzw. $H_2SO_4 + CaO \longrightarrow CaSO_4 + H_2O$

So zeigte sich bei einer Staubanalyse der verbrauchten Sorbentien, daß die meisten Schadstoffe durch Sulfatbildung bzw. Nitratbildung abgebunden sind, und nur ein geringer Teil in an sich bekannter Weise als Sulfite bzw. Nitrite vorliegen. Durch die Abgabe von oxidierenden Radikalen wie $OH^*$ ist natürlich das Sorbens auf Hydrogenkarbonate bzw. Hydroxide hauptsächlich einge-schrankt, so daß hauptsächlich Speisesoda, $Ca(OH)_2$ und $Mg(-OH)_2$ oder auch organische Sorbentien wie beispielsweise Harnstoff mit den verschiedensten Zusätzen bzw. Verunreinigungen und auch deren Mischungen untereinander Verwendung finden können. Die Sorbentien sollen feingemahlen sein, wobei als obere Korngröße 125 $\mu$m zu betrachten sind.

In der nachstehenden Tabelle sind Versuchsergebnisse mit mehreren Sorbentien in unterschiedlicher Korngröße und auch in unterschiedlichen Reaktortypen angegeben, wobei darauf hingewiesen wird, daß die Sorbentien jeweils trocken Verwendung gefunden haben. Als wichtiger kennzeichnender Wert wurde ferner das Verhältnis kg Abgas/h zu kg im Reaktor bzw. Sorbensbett vorhandenen Sorbens angegeben, woraus ersichtlich ist, daß im Reaktor ein Tages- bzw. Wochenvorrat an Sorbens vorhanden ist, so daß Schwankungen im Schadgasgehalt, wie sie beispielsweise bei Müllverbrennungsanlagen vorkommen, durch die erfindungsgemäße Reinigungsanlage problemlos aufgenommen werden können und die Steuerung der frisch zugeführten Sorbentien praktisch dem Mittelwert entsprechend erfolgen kann. Ein weiterer wesentlicher kennzeichnender Teil ist die niedere Temperatur, bei der die Sorption durchgeführt wird, die das lange Anhalten der Reaktivität der Sorbentien erklärt.

Diese Ad- bzw. Chemisorption-Maßnahmen fördern auch die Einbindung von Schwermetallen z.B. in Form von Metallchloriden, Metallhalogeniden. Wesentlich ist auch, daß bei dem beschriebenen Verfahren die Schadgase zum höchstoxidierten Produkt (Nitrat, Sulfat) oxidiert werden, so daß im Abfall sehr wenig Nitrit und Sulfit gefunden wird und NO bzw. $NO_2$ unter der Sichtbarkeitsgrenze von 45 ppm emittiert werden, wobei Entstickungsgrade von 80 % erreicht werden.

Die durchgeführten Versuche zeigten ferner, daß unverbrannte Abgasbestandteile wie z.B. CO, $C_nH_m$, beim Durchtritt durch den Reaktor im Rahmen der chemischen und katalytischen Umsetzungen oxidiert werden, also im Kamin nicht oder nur in bedeutend geringerem Maße gefunden werden.

Ferner zeigten Versuche mit dem Verfahren, daß das Schadstoff verhältnis $SO_2/NO_x$ vor dem Eintritt in die Niedertemperatur-Sorptionsstufe größer als 1,5, insbesondere größer als 2, sein soll, damit die Endreinigung besonders wirkungsvoll ist. Um dies zu erreichen, ist es sinnvoll, durch an sich bekannte Primärmaßnahmen die $NO_x$-Entstehung durch gestufte Brennstoffeintragung oder Rauchgaszirkulation einzubremsen bzw. durch an sich bekannte Sekundärmaßnahmen das entstandene $NO_x$ durch Einblasen von bei über 750° C zerfallenden N-Verbindungen, wie z.B. Harnstoff, Cyanursäure, $NH_3$- oder $NH_4$-haltigen Verbindungen in wässriger oder dampfgelöster bzw. dispergierter Form, insbesondere durch Verwendung eines Katalysators, abzubauen. Die Abgase der Brennkammer 1 werden in einem Trockenabscheider 7 vom Flugstaub zumindest grob gereinigt und durchströmen den Reaktor 4, in dem die erfindungsgemäße Behandlung zur Sorption der Schadgase und abschließende Endreinigung erfolgt. Das Sorptionsmittel, welches trocken zugeführt wird, zerfällt zum Teil durch die relativ hohen Temperaturen durch Wasser-, $CO_2$- und/oder NH3-Abspaltung, wodurch die anschließende Sorption der Schadstoffe erleichtert wird. Zur Erhöhung der Absorptionsfähigkeit wird das Sorptionsmittel vor seinem Einblasen in Mühlen gemahlen, so daß die Bruchflächen frisch sind und eine gewisse Aktivierungsenergie beinhalten.

Die Mühlen können im Rauchgasstrom bei Temperaturen von kleiner 500° C angeordnet werden bzw. direkt von einem Teilstrom des Rauchgases durchströmt werden, wobei das Rauchgas auch als Transportmedium dient. Bei der Verwendung von Luft als Transportmedium wird durch die Mahlung und Einblasung der Sorption Luft zugeführt und der Luftüberschuß aus der Verbrennung im Dampferzeuger von etwa 4-6 % auf 9-15 % erhöht, wodurch die Sulfat- und Nitratbildung erleichtert wird, die wieder die Sorption erleichtert. Als Sorptionsmittel für die Zuführungen werden Hydrogenkarbonate verwendet, wobei $NaHCO_3$ das wirtschaftlichste (billigste) ist. Da aber die Hydrogenkarbonate auch in der Natur vorkommen, bzw. Pottasche auch als Abfallgut mehr oder weniger rein in chemischen Betrieben anfallen kann, ist die Wirtschaftlichkeit der einzelnen Hydrogenkarbonate nicht von vornherein gegeben, so daß auch das teuerste (Pottasche) unter Umständen das wirtschaftlichste ist. Das Hydrogenkarbonat wird in der Menge eingeblasen, daß der $SO_x$-Gehalt und $NO_x$-Gehalt abgebunden und mit dieser Stufe simultan entschwefelt und entstickt werden kann. Zu diesem Zweck wird knapp vor dem Reaktor 4 über die Aufgabestelle das Hydrogenkarbonat in der stöchiometrischen Menge zur Abscheidung von $SO_x$ und $NO_x$ eingeblasen, wobei dieses Sorptionsmittel sich am Flächenfilter anlegt und eine Art Filterkuchen bildet, durch den das Schadgas hindurchzutreten hat, um in den Reingasraum, der mit dem Kamin direkt verbunden ist, zu gelangen. Zur Erhöhung des Abscheidegrades und auch zur Verminderung der Stöchiometrie wird dem Sorptionsmittel Aluminiumoxid in irgend einer Form wie z.B. Bauxit oder auch ein anderes aktivierbares Sorptionsmittel, wie z.B. Silicagel, etwa im gleichen Mengenverhältnis wie das Hydrogenkarbonat, eingeblasen, welches katalysatorische Wirkungen und auch durch seine Aktivierung Sorptionseigenschaften aufweist, die insbesondere die Umwandlung des $NO_x$ in Nitrate und Nitrite sowie des $SO_x$ in Sulfite und Sulfate bewirkt. Aber es ist auch ein Abbau des $NO_x$ zu Stickstoff beobachtet worden.

Teilweise wird aber auch die Adsorption angesprochen, so daß die Schadstoffe direkt in den Kristallaufbau des Bauxites eingebunden werden. Wir verweisen hiezu auf die Gleichung 9. Das Bauxit wird zur Aktivierung zuerst gemahlen, wobei eine mittlere Korngröße von kleiner als 10 μm erreicht werden soll. Die Aktivierung des Bauxit erfolgt bei Temperaturen zwischen 300 bis 700° C und kann gegebenenfalls im Rauchgaskanal des zu reinigenden Gasstromes, in einem Teilgasstrom oder auch getrennt vom Rauchgas vorgesehen werden. Dadurch erhöht sich die innere Oberfläche des Bauxits von etwa BET 0,5 m2/g auf mindestens BET 100m2/g, wobei Porengrößen von etwa 800 bis 2000 Angström erreicht werden. Dieses vollaktivierte Bauxit ist mit $Al_2O_3^*$ gekennzeichnet. Dieses vollaktivierte Bauxit oder ein Ersatzstoff wird nun gesammelt und nach Bedarf zusammen mit dem Hydrogenkarbonat eingeblasen. Es soll auf jeden Fall erreicht werden, daß im Reaktor sowohl vollaktiviertes Bauxit als auch unreagiertes Hydrogenkarbonat, welches sich in der Warme nach Abspaltung von Wasser in $Na_2CO_3^*$ umwandelt, vorhanden ist. Das Mischungsverhältnis der Hydrogenkarbonate mit dem Bauxit hängt vom $SO_x/NO_x$ Verhältnis im Gasstrom ab. Bei einem $SO_x/NO_x$ Verhältnis von kleiner 1,5 ist das Verhältnis Bauxit/Hydrogenkarbonat (Speisesoda) größer 2. Bei $SO_x/NO_x$ größer 3 steigt der Speisesodaanteil und das Verhältnis wird kleiner/gleich 1. Ist das $SO_x/NO_x$ Verhältnis kleiner als 3 kann das Flächenfilter im Gasstrom bei 280 - 120° C also bei besonders tiefer Temperatur angeordnet werden. Zur weiteren Verringerung des Deponiegutes ist es möglich, das $Al_2O_3$ zumindest teilweise aus abgereinigten Stäuben herauszuwaschen und nochmals zu verwenden. Gleichzeitig ist es auch möglich, das Natriumsulfat zumindest teilweise wieder in Speisesoda umzuwandeln, wobei die Sulfate und gegebenenfalls auch Nitrate oder Nitrite in anderen Salzen eingebunden werden, deren Metallionen eine höhere Aktivität als Natrium aufweisen. Für die thermische Aktivierung der Hydrogenkarbonate und des Bauxits sind die drei nachstehenden Gleichungen 1), 2), 3) relevant:

1) $2NaHCO_3 \xrightarrow{T} Na_2CO_3^* + H_2O + CO_2$

2) $2Al(OH)_3 \xrightarrow{T} Al_2O_3^* + 3H_2O$

3) $2AlO(OH) \xrightarrow{T} AL_2O_3^* + H_2O$

Für die Wirkung der aktivierten bzw. voll aktivierten Substanzen sind die Gleichungen 4) bis 9) zuständig:

4) $Na_2CO_3^* + SO_2 + 1/2 O_2 = Na_2SO_4 + CO_2$

5) $Na_2CO_3^* + SO_2 = Na_2SO_3 + CO_2$

6) $Na_2CO_3^* + SO_2 + NO + O_2 = Na_2SO_4 + CO_2 + NO_2$

7) $Na_2CO_3^* + SO_2 + 2NO + 2NaHCO_3 + 2O_2 = NaSO_4 + 2NaNO_3 + 3CO_2 + H_2O$

8) $Na_2CO_3^* + SO_2 + NO + NO_2 + 2NaHCO_3 + O_2 = Na_2SO_4 + NaNO_3 + NaNO_2 + 3CO_2 + H_2O$

9) $Al_2O_3^* + SO_2 + NO + NO_2 = AL_2O_3 ( SO_2 + NO + NO_2 ) + ads$

Bei der Auswertung der bekannten Verfahren und der Versuche zeigten sich gesetzmäßige Abhängigkeiten des $SO_x$- und $NO_x$-Gehaltes bei der Abscheidung, wobei der $NO_x$-Abbau mit dem Sulfat- bzw. Sulfitgehalt im Zusammenhang steht. Es wurde daher als wichtig erkannt, den $NO_x$-Rückbildungen entgegenzuwirken und in einer vorgeschalteten Stufe den freien Sulfitgehalt des Abgases vor der $NO_x$-Abtrennung durch beispielsweise Kalk einblasen zu reduzieren, so daß dem $NO_x$ neben dem unverbrauchten Sorptionsmittel auch noch im reduzierten Umfang ein Sulfitgehalt zur Verfügung steht und sich ein abscheidbares Nitrat bzw. Nitrit bildet, und ein Teil des $NO_x$ durch Sulfatbildung bzw. Nitratbildung ohne Bindung des Sorptionsmittels zerfällt. Bei diesen Versuchsreihen zeigte sich, daß aktivierter Bauxit die Umwandlung begünstigt, so daß letzten Endes höhere Abscheidegrade sogar bei unterstöchiometrischen Verhältnissen erreichbar sind. Diese Zusammenhänge werden an Hand des nachstehenden Beispiels illustriert:

Beispiel 1

Das Rauchgas einer Verbrennungsanlage beinhaltet vor dem Trockenabscheider 20 g/Nm3 Staub, 15 mg HCl/Nm3, 45 mg HF/Nm3, 2300 mg $SO_2$/Nm3, 600 mg $NO_x$/Nm3.

Im Staubabscheider wird der Staub etwa auf 1g/Nm3 reduziert. Durch die Zuführung von $NaHCO_3$, welches in der Mühle auf den Median von 13 μm gemahlen wird, weit vor dem Flächenfilter 1 ergibt sich nach einer Kontaktzeit von 1,5 Sek. bei einer Stöchiometrie von 1,3 auf den $SO_2$-Gehalt gerechnet, eine Reduzierung der Schadgase auf 5 mg HCl/Nm3, 0,5 mg HF/Nm3, 700 mg $SO_2$/Nm3, 500 mg $NO_x$/Nm3.

Wird nur $NaHCO_3$ mit einer Stöchiometrie von 1,4 durch die Zuführung aufgegeben, ergibt sich ein Reingasgehalt von 1,5 mg HCl/Nm3, 0,1 mg HF/Nm3, 260 mg $SO_2$/Nm3, 240 mg $NO_x$/Nm3, wobei die Stöchiometrie auf den $SO_2$-und $NO_x$-Gehalt gerechnet wurde. Wird aber gleichzeitig mit dem $NaHCO_3$ vollaktivierter Bauxit, etwa im Mengenverhältnis 1 : 1 zugeführt, so verringert sich der Schadgasanteil im Reingas, also im Kamin, auf die Zusammensetzung 1,0 mg HCl/Nm3, 0,1 mg HF/Nm3, 100 mg $SO_2$/Nm3, 110 mg $NO_x$/Nm3.

Beispiel 2

Bei einem mit Braunkohle befeuerten Dampferzeuger entsteht ein Abgas mit einem $SO_x/NO_x$-Verhältnis von 1,5 und einem $NO_x$-Gehalt von 800 mg/m³ Abgas, das gereinigt werden muß. Allein durch die trockene Chemisorption läßt sich das $NO_x$ nur unzureichend um 50 % auf 400 mg/m³ verringern. Die $SO_x$-Abscheidung ist problemlos. Wird jedoch auch bereits vor der Chemisorption $NO_x$ abgebaut, beispielsweise durch geringe $NH_3$-Zugaben ($NH_3/NO_x$-Verhältnis 0,7), so entsteht ein unbedeutender $NH_3$-Schlupf von unter 10 mg/m³ und der $NO_x$-Gehalt im Kamin fällt unter 200 mg/m³, da durch den 30%-igen $NO_x$-Abbau in der ersten Stufe das $NO_x/SO_x$-Verhältnis vor der Sorptionsstufe auf 2,1 und damit der $NO_x$-Abscheidegrad in der Chemisorption auf 70 % verbessert wird. (800 - 800 x 0,3 - 560 x 0,7 = 168).

Zur Steuerung des $SO_x/NO_x$-Verhältnisses vor der Chemisorption lassen sich alle bekannten Verfahren verwenden, wobei es auf die Einhaltung von hohen Wirkungsgraden von sekundärer Bedeutung ist. Im allgemeinen kommt man mit Wirkungsgraden von unter 50 % aus, so daß hier noch Reserven bestehen.

Zur Verringerung des $NO_x$-Gehaltes gibt es

a) Primärmaßnahmen, die die Bauart der Brennkammer beeinflussen, so z.B. gestufte Brennstoffverbrennung und Verminderung der Brennkammertemperatur, beispielsweise durch Abgasrücksaugung, sowie

b) Sekundärmaßnahmen durch Zugabe von zerfallenden N-Verbindungen, wie z.B. Harnstoff, Cyanursäure, $NH_3$- oder $NH_4$-hältige Verbindungen mit oder ohne Katalysatoren, wobei sowohl im Teilstrom als auch im Hauptstrom die Entstickung durchgeführt werden kann.

Die abschließende $NO_x$- und $SO_x$-Abscheidung erfolgt in einem Chemisorptionsabschnitt bei unter 160° C, insbesondere 130° C, vorzugsweise auf einem mit Sorptionsmittel belegten Tuch- oder Schlammfilter, wobei die Schichtdicke mindestens 0,5 mm beträgt. Das Sorptionsmittel weist eine Korngröße von kleiner als 60 μm auf, wobei die mittlere Korngröße kleiner als 20 μm ist. Dazu empfiehlt sich eine thermische Vorbehandlung des Sorptionsmittels bei höheren Temperaturen als 130° C, so daß eine Oberfläche von mehr als 3 m²/g erreicht wird. Als Sorptionsmittel kommt hauptsächlich Speisesoda, eventuell in Mischung mit Bauxit oder $Ca(OH)_2$ in Frage, die $SO_2$ sorbieren und durch Änderung der Ladungszustande auch das $NO_x$ zerlegen bzw. binden, wobei auch Sulfat- und Nitratbildung beobachtet worden ist. Bei der Regelung der Zugabe des Sorptionsmittels insbesondere im Hinblick auf die Abreinigung bzw. Precoating des Flächenfilters hat es sich als günstig herausgestellt, daß Hydrogenkarbonate am Ende des Rauchgaskanales 3 vor dem Flächenfilter 1 diskontinuierlich aufgegeben werden.

Im Rahmen der Erfindung ist es möglich, auf den Trockenreiniger 6 zu verzichten und sich mit der Vorabscheidung in den einzelnen Kesselteilen zu begnügen, wodurch der Rohstaubgehalt im Rohgas erst im Flächenfilter 1 aufgefangen wird und der dort abgeschiedene Rohstaub seine Wiederverwendbarkeit verliert. Darüber hinaus kann anstelle von im Beispiel genannten Natriumhydrogenkarbonat auch Ammonhydrogenkarbonat verwendet werden (Hirschhornsalz), welches noch leichter als Speisesoda zerfällt.

Wenn das ursprüngliche Verhältnis $SO_x$ : $NO_x$ größer als 4,5 ist, ist es vorteilhaft, in der Brennkammer eine $SO_x$-Vorabscheidung mittels Einblasung von Kalk oder Hirschhornsalz vorzunehmen, wodurch sich die Entstickung in die niedere Temperaturzone verlagern läßt und ein Verhältnis $SO_x$ : $NO_x$ von etwa 1 : 1 bis 1 : 3 zu Beginn der Endabscheidung erreicht wird. Um eine gleich mäßige Dispergierung oder Verteilung des Sorptionsmittels über den Rauchgasquerschnitt zu erreichen, wird eine venturiartige Ausbildung des Rauchgaskanales an der Stelle der Zuführungen 4 bzw. 5 vorgeschlagen, wobei im Eintrittsbereich des Venturirohres die Zuführungsleitung für das Sorptionsmittel bis zur Stremungsmitte geführt ist und dort schräg abgeschnitten ist, so daß das strömende Rauchgas das Sorptionsmittel in die Venturikehle hineinzieht. Statt der schräg abgeschnittenen Zuführungsleitung kann auch eine 90°-Umlenkung in Richtung zur Venturikehle vorgesehen sein.

Bei der Erfindung ist es wesentlich, daß der zu reinigende Gasstrom einen Filterkuchen durchdringt, in dem noch aktives oder aktiviertes Sorbens vorhanden ist. Es ist daher für die Abreinigung und noch viel mehr für die Aufbringung der frischen Sorbensmassen besondere Sorgfalt notwendig. Zu diesem Zweck ist es vorteilhaft, mehrere parallel geschaltete Flächenfilter 1, 1' vorzusehen ,von denen jeweils eines zur Abreinigung und neuer Beschichtung ausgeschaltet ist, ohne daß zusätzliche Impulse in den Gasstrom eingebracht werden. Ein weiterer Vorteil besteht darin, daß die kleineren Strömungsquerschnitte besser gleichmäßig mit dem Sorbensmittel versorgt werden können als extrem große, so daß der Tandenbetrieb zweier Filter verbessert werden kann durch beispielsweise 5 parallele Filter, von denen jeweils eines abgereinigt wird.

Versuchsergebnisse

| Material | Korngröße μm | Feststoff-dichte kg/m³ | Druckver-lust mbar | Schicht-höhe mm | Verhältnis kg Ab-gas/h:kg Sorbens; h⁻¹ | °C | (Mindest)Abscheide-grad $SO_x$ % | $NO_x$ % | Maximaler $NO_2$-Gehalt Kaminein-tritt ppm |
|---|---|---|---|---|---|---|---|---|---|
| **1. Festbett** | | | | | | | | | |
| $NaHCO_3$ fein | 15 | 540 | 25 | 23 | 4,9 | 92 | 80 | 80 | 45 |
| $NaHCO_3$ fein | 15 | 540 | 40 | 31 | 3,0 | 95 | 90 | 85 | 35 |
| $NaHCO_3$ grob | 100 | 1270 | 20 | 29 | 1,5 | 104 | 85 | 75 | 60 |
| $NaHCO_3$ grob | 100 | 1270 | 12 | 10 | 4,2 | 96 | 65 | 50 | 90 |
| $Ca(OH)_2$ | 5 | 470 | 60 | 26 | 4,3 | 108 | 60 | 50 | 20 |
| je 50 % $NaHCO_3$fein $Ca(OH)_2$ | 15 – 5 | 505 | 55 | 30 | 4,0 | 103 | 85 | 80 | 40 |
| $Mg(OH)_2$ | 10 | 310 | 50 | 22 | 4,1 | 88 | 65 | 60 | 20 |
| **2. stationäres Wirbelbett** | | | | | | | | | |
| $NaHCO_3$ | 100 | 890 | 7 | 45 | 1,5 | 99 | 90 | 80 | 30 |
| **3. zirkulierendes Wirbelbett** | | | | | | | | | |
| $NaHCO_3$ | 15 | 50 | 1,5 | 4200 | 2,2 | 94 | 90 | 85 | 40 |

**Ansprüche**

1) Verfahren zur Abgas- oder Abluftreinigung mittels trocken eingebrachter pulvriger oder körniger Sorbentien bei weniger als 500° C in einer Niedertemperaturstufe, in der saure und/oder oxidierbare Schadgase, wie z.B. $SO_x$, HCl, HF, $NO_x$, CO, $C_nH_m$, unter Abgabe von oxidierenden Radikalen, insbesondere OH*, vom Sorbens abgebunden werden, wobei das Abgas zumindest teilweise vor dem Eintritt in die Niedertemperaturstufe vom Flugstaub befreit wurde und mindestens 2 Vol.% Sauerstoff enthält, dadurch gekennzeichnet, daß dem im Abgasstrom ausgebreiteten Sorptionsbett, insbesondere Flächenfilter, bei 30 bis 400° C, vorzugsweise 85 bis 115° C, im nahstöchiometrischen Verhältnis zu den Schadgasen frisches und/oder rezirkuliertes Sorbens zugeführt, dem Abgasstrom somit Sorbens in einem mehrfach überstöchiometrischen Verhältnis über eine lange mittlere Verweilzeit dargeboten und verbrauchtes Sorbens zumindest diskontinuierlich abgeführt wird, wobei das Sorptionsbett eine Mindestschichtstärke von 0,5 mm, insbesondere mittlere Schichtstärke von 2 bis 20 mm, bei einer mittleren Korngröße des verwendeten Sorbens von hechstens 125 μm aufweist.

2) Verfahren nach Anspruch 1, dadurch gekennzeichnet, daß das Verhältnis kg Abgas/h zu kg Sorbens im Sorptionsbett, kleiner gleich 500 $h^{-1}$ ist, und die mittlere Verweilzeit des Sorbens im Sorptionsbett mindestens 20 Minuten und des Gases bei einer relativen Feuchtigkeit von kleiner gleich 99,9 % im Sorptionsbett mindestens 0,1 Sek. beträgt.

3) Verfahren nach Anspruch 1, dadurch gekennzeichnet, daß in der Niedertemperaturstufe als Sorbens Hydrogenkarbonate, insbesondere $KHCO_3$, $NH_4HCO_3$, $NaHCO_3$ und/oder $Mg(HCO_3)_2$, oder ein Gemisch aus Hydrogenkarbonaten und Aluminiumoxiden mit einer Korngröße von kleiner als 10 μm, wie $Al_2O_3$, AlOOH, oder Ersatzstoffen, wie Bauxit, Silicagel, Borsäure, einfache organische Säuren, wie z.B. Ameisen-, Essig- und/oder Weinsäure, und/oder deren thermisch zersetzliche Alkali- und Erdalkalisalze verwendet werden, wobei das Mischungsverhältnis der Hydrogenkarbonate mit dem Aluminiumoxid in Abhängigkeit des Mischungsverhältnisses der Schadstoffe, insbesondere bei einem $SO_2/NO_x$-Verhältnis von kleiner 1,5, das Verhältnis Bauxit/speisesoda größer 2 und bei $SO_2/NO_x$ größer 3 das Verhältnis Bauxit/speisesoda kleiner gleich 1 gewählt wird.

4) Verfahren nach Anspruch 2, dadurch gekennzeichnet, daß bei der Verwendung von $NaHCO_3$ als Hauptbestandteil bei einer mittleren Korngröße zwischen 65 und 20 μm als Sorbens das Verhältnis kg Abgas/zu kg Sorbens im Sorptionsbett kleiner als 100 $h^{-1}$, insbesondere kleiner als 10 $h^{-1}$, und bei einer kleineren mittleren Korngröße von kleiner als 20 μm kleiner als 250 $h^{-1}$, insbesondere bei kleiner als 25 $h^{-1}$, liegt.

5) Verfahren nach Anspruch 2, dadurch gekennzeichnet, daß bei Verwendung von $Ca(OH)_2$ als Hauptbestandteil des Sorbens das Verhältnis kg Abgas/h zu kg Sorbens im Sorptionsbett bei einer mittleren Korngröße des Sorbens von kleiner gleich 10 μm kleiner 100 $h^{-1}$, liegt.

6) Verfahren nach Anspruch 2, dadurch gekennzeichnet, daß bei Verwendung von $Mg(OH)_2$ als Hauptbestandteil des Sorbens das Verhältnis kg Abgas/h zu kg Sorbens im Sorptionsbett bei einer mittleren Korngröße des Sorbens von kleiner gleich 10 μm kleiner 150 $h^{-1}$, insbesondere bei kleiner 15 $h^{-1}$, liegt.

7) Verfahren nach Anspruch 1, dadurch gekennzeichnet, daß auf der Hochtemperatur- bzw. Brennkammerseite bei Temperaturen von über 750° C das Schadgasvolumskonzentrationsverhältnis $SO_x$ zu $NO_x$, insbesondere bei schwefelarmen Brennstoffen, vor dem Eintritt in die Niedertemperaturstufe auf größer als 1,5, insbesondere größer als 2, bzw. der absolute $NO_x$-Gehalt an derselben Stelle auf unter 1000, insbesondere auf unter 400 $mg/m^3$, eingestellt wird.

8) Verfahren nach Anspruch 1 oder 7, dadurch gekennzeichnet, daß das in der Niedertemperaturstufe anfallende Reaktionsprodukt, bei dem das abgeschiedene $SO_x$ des Abgases zu mehr als 85% als Sulfat im Sulfat/sulfitgemisch und das abgeschiedene $NO_x$ des Abgases zu mehr als 80 % als Nitrat im Nitrat/Nitritgemisch nachweisbar ist, insbesondere zum Abbau des karbonisierten Anteils oder Einstellung des $SO_x/NO_x$-Verhältnisses, in die Brennkammer zur Vorabscheidung von sauren Schadstoffen, insbesondere von Chloriden, Fluoriden und $SO_x$, eingeblasen wird.

9) Verfahren nach Anspruch 7, dadurch gekennzeichnet, daß das Schadgasvolumskonzentrationsverhältnis durch an sich bekannte Primärmaßnahmen zur Verringerung der $NO_x$-Entstehung, beispielsweise durch gestufte Brennstoffeintragung oder durch Rauchgasrezirkulation, und/oder durch an sich bekannte Sekundärmaßnahmen zur Verringerung des bei der Verbrennung entstandenen $NO_x$ durch Einblasen von an sich bekannten, bei über 400° C zerfallenden N-Verbindungen, wie z.B. Harnstoff, Cyanursäure, $NH_3$- oder $NH_4$-hältigen

Verbindungen, in wässriger oder dampfgelöster bzw. dispergierter Form, insbesondere durch Verwendung eines Katalysators, gesteuert wird.

10) Verfahren nach Anspruch 1 oder 7, dadurch gekennzeichnet, daß das in der Niedertemperaturstufe Verwendung findende Sorptionsmittel teilweise bereits als Sorbens in die Brennkammer eingeblasen, dort teilweise gebrannt und teilweise mit Schadstoffen beladen wird und dem Niedertemperatur-Sorptionsbett zur Reaktion mit den restlichen Schadgasen zugeführt wird.

11) Vorrichtung zur Durchführung des Verfahrens nach mindestens einem der Ansprüche 1 bis 10, dadurch gekennzeichnet, daß zwischen einer Brennkammer (1) und dem Kamin (2) einer Abgasleitung (3), insbesondere vor einem Saugzuggebläse (8), im Temperaturbereich zwischen 30 und 130° C ein Sorbens enthaltender Reaktor 4, insbesondere Sorptionsfestbett mit einer mittleren Schichtdicke des Sorbens von 2 bis 20 mm, dem frisches Sorbens zugeführt wird, vorzugsweise mit angeschlossenem Filter (5), dem teilweise verbrauchtes Sorbens entnommen wird, angeordnet ist, daß für das teilweise verbrauchte Sorbens eine Rückführungsleitung (6) in die Brennkammer (1) vorgesehen ist, in welcher das Sorbens teilweise reaktiviert und weiter mit Schadgasen beladen wird und daß nach Durchlaufen eines Reaktionsweges in der Abgasleitung (3) ein Abscheider (5 und/oder 7), insbesondere vor Erreichen des Reaktors (4), für das zumindest teilweise mit Schadgasen beladene Sorbens angeordnet ist.

12) Vorrichtung nach Anspruch 11, dadurch gekennzeichnet, daß das vom Sorbens erfüllte Reaktorvolumen bei einem stationären Fließ- oder Wirbelbett eine Feststoffdichte von mindestens 200 kg/m$^3$ aufweist.

13) Vorrichtung nach Anspruch 11, dadurch gekennzeichnet, daß die Feststoffdichte im vom Sorbens erfüllten Reaktorvolumen bei einem Festbettfilter mindestens 300 kg/m$^3$ beträgt, welches vorzugsweise durch Auflockerungseinrichtungen wie z.B. Krälwerke oder Druckluftstöße, diskontinuierlich zur Einhaltung eines maximalen Druckabfalles von 0,02 bar aufgelockert wird.

14) Vorrichtung nach Anspruch 11, dadurch gekennzeichnet, daß das Sorptionsbett als zirkulierende Wirbelschicht ausgebildet ist, bei der das vom Sorbens erfüllte Reaktionsvolumen eine Feststoffdichte von mindestens 10 kg/m$^3$ aufweist.

Fig.1

Fig. 2

Fig.3